Europäisches Patentamt

(19) European Patent Office

Office européen des brevets

(11) Publication number: **0 194 081**
**B1**

(12) **EUROPEAN PATENT SPECIFICATION**

(45) Date of publication of the patent specification:
**04.10.89**

(21) Application number: **86301243.1**

(22) Date of filing: **21.02.86**

(51) Int. Cl.⁴: **B29C 49/24, B65C 1/04**

(54) **Apparatus for labelling plastics articles.**

(30) Priority: **01.03.85 US 707335**

(43) Date of publication of application:
**10.09.86 Bulletin 86/37**

(45) Publication of the grant of the patent:
**04.10.89 Bulletin 89/40**

(84) Designated Contracting States:
**AT BE CH DE FR GB IT LI LU NL SE**

(56) References cited:
**FR-A- 2 343 653**
**US-A- 4 479 644**
**US-A- 4 479 771**
**US-A- 4 498 854**

(73) Proprietor: **OWENS-ILLINOIS PLASTIC PRODUCTS INC.,
One SeaGate, Toledo Ohio 43666(US)**

(72) Inventor: **Nowicki, Casimir William, 7460 Erie Street,
Sylvania Ohio 43560(US)**
Inventor: **Franks, Nelson James, 2204 Dundas Street,
Toledo Ohio 43606(US)**

(74) Representative: **Ranson, Arthur Terence et al, W.P.
Thompson & Co. Coopers Building Church Street,
Liverpool L1 3AB(GB)**

## Description

This invention relates to the labelling of plastics articles, and more particularly of hollow blown plastics articles.

In the making of hollow blown plastics articles such as containers, it has heretofore been suggested that labels be held in one or more of the mould sections by vacuum so that when the parison is blown outwardly into conformity with the cavity, the label becomes adhered or bonded to the article.

The moulds are often provided in a plurality of sets of partible moulds, and in order to deliver the labels, a plurality of magazines are provided, one for each set of moulds, and an associated plurality of pick up and delivery devices function to remove labels from the magazines and deliver them to one or both of the mould halves of each set.

Among the objectives of the present invention are to provide an apparatus for delivering labels which requires one magazine where one label is to be delivered to each mould of a set of moulds, and two magazines when two labels are delivered to each mould of a set of moulds; wherein large labels that wrap around more than 180° about the hollow article, such as a container, can be used even though the relative dimensions and spacing of the moulds is less than the width of the labels; and wherein fewer tools are required and resultant savings in cost are obtained.

US-A 4 046 613 discloses a label applicator in which articles to be labelled are passed through a labelling station in side-by-side relationships forming sets or columns. Self-adhesive labels are deposited in sequence on a conveyor belt and held thereon by differential fluid pressure as they are transported to the labelling station, where they are blown off onto the articles.

Turning now to the more specific art of the present invention, US-A 4 479 771 discloses an in-mould label dispenser for supplying labels to a multiple cavity blow molding machine wherein a labeldispensing head moves between a withdrawn position and an inserted position between sections of open moulds to insert labels from one or two magazines into the open moulds prior to closure of the blow mould cavities and initiation of the blow moulding operation.

It will seem therefore that apparatus for labelling hollow plastic articles during formation is known and which comprises one, respectively two, magazines for the labels which are themselves picked up by a dispensing head, which delivers them into an open mould in accordance with an array of the mould sections. Also known are means for loading the labels from the magazine(s) to the dispensing head by indexing them in predetermined distances in relation to the spacing of the sets of the mould sections. What is not known from the prior art is the provision of an endless belt transfer conveyor and means to remove the array of labels simultaneously from this endless conveyor to the dispensing head.

The use of an endless conveyor for receiving an array of labels provides for a much less complex construction than would be necessary if individual labels were handled by individual removal and delivery mechanisms as indicated in the prior art.

According to the present invention then, apparatus for forming hollow plastic articles wherein parisons are blown outwardly into conformity with the cavities of an array of sets of partible mould sections which open and close and are in a predetermined array, including label-handling arrangements which comprise a magazine for supporting labels in a stack and a dispensing head for delivering the labels into the array of open mould sections, is characterised by an endless belt transfer conveyor positioned adjacent the magazine, means for indexing said belt conveyor along predetermined distances corresponding to the spaces between the sets of said mould sections of said array, means for successively removing a label from the magazine and depositing it on said conveyor, to produce a predetermined array of spaced labels with the spacing between the labels on the endless transfer conveyor corresponding to the spaces between the sets of mould sections, and means for simultaneously removing the array of labels from said endless transfer conveyor and delivering them between the array of open partible mould sections.

Further, according to the present invention, apparatus for forming hollow plastic articles wherein parisons are blown outwardly into conformity with the cavities of an array of sets of partible mould sections which open and close and are in a predetermined array, including label handling arrangements which comprise a magazine for supporting labels in a stack and a dispensing head for delivering the labels into the array of open mould sections, is characterised by an endless belt transfer conveyor of the vacuum type positioned adjacent said magazine, means for indexing said belt conveyor along predetermined distances corresponding to the spaces between the sets of said mould sections of said array, means for successively removing a label from the magazine and depositing it on the conveyor, to produce a predetermined array of spaced labels with the spacing between the labels on said endless transfer conveyor corresponding to the spaces between the sets of mould sections, a pick-up and delivery device, means for moving said pick-up and delivery device adjacent the magazine for picking up a label, and means for translating said pick-up and delivery device to deposit said labels consecutively onto said conveyor as the conveyor is indexed, said lastmentioned means comprinsing a carriage, means for removing and simultaneously delivering said labels comprising a plurality of label delivery devices, corresponding in number to the number of sets of mould sections and positioned at a spacing corresponding to the spacing between the labels in the array on the endless transfer conveyor, vacuum devices for moving said label delivery devices from a position adjacent said conveyor to a position within an array of the sets of open partible mould sections, said delivery devices having means for removing said labels from said conveyor and means for depositing said labels within said mould sections, means for guiding said carriage in movement in a linear path parallel to the conveyor, and an endless reversible screw parallel to the conveyor operable to move said carriage back and forth in said linear path, said pick-up and delivery device being mounted for pivotal movement on said carriage, interengaging means between said pick-up and delivery device and said carriage operable upon movement of the carriage to the extremes of its linear movement such that the pick-up and delivery device is moved at one end of said linear movement into engagement with the magazine for picking up a label and upon return movement is moved out of engagement with the magazine and upon returning to the other end of the linear movement in the opposite direction is moved to bring the label into engagement with the endless conveyor, said interengaging means comprising a secondary carriage mounted on said first mentioned carriage, said secondary carriage being connected to said pickup and delivery device and movable relative to said first carriage, said interengaging means further comprising a cam on said secondary carriage and a cam follower on said pick-up device.

Further embodiments of the invention are defined in the features of the dependent claims.

The invention will now be further described by way of example with reference to the accompanying drawings, in which:

Fig. 1 is a fragmentary partly diagrammatic end view of an apparatus embodying the invention;

Fig. 2 is an enlarged fragmentary part sectional view of the apparatus shown in Fig. 1;

Fig. 3 is likewise an enlarged plan view of a portion of the apparatus;

Fig. 4 is a fragmentary elevational view of the portion of the apparatus shown in Fig. 3;

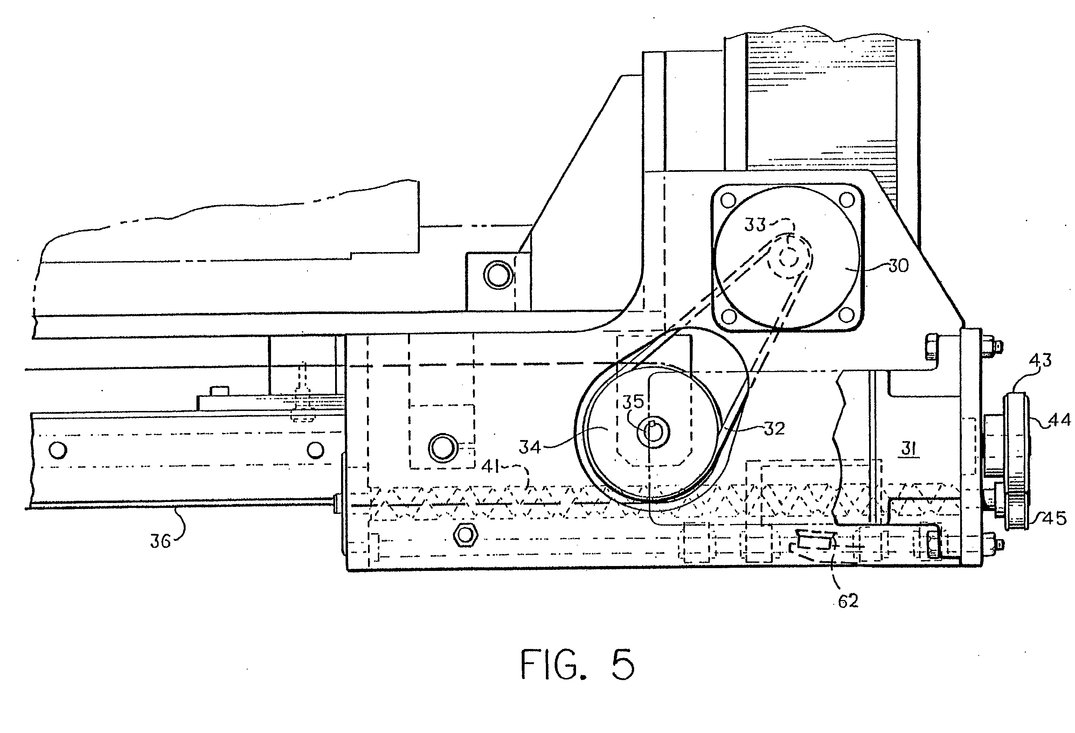

Fig. 5 is a fragmentary view to an enlarged scale of a portion of the apparatus shown in Fig. 3;

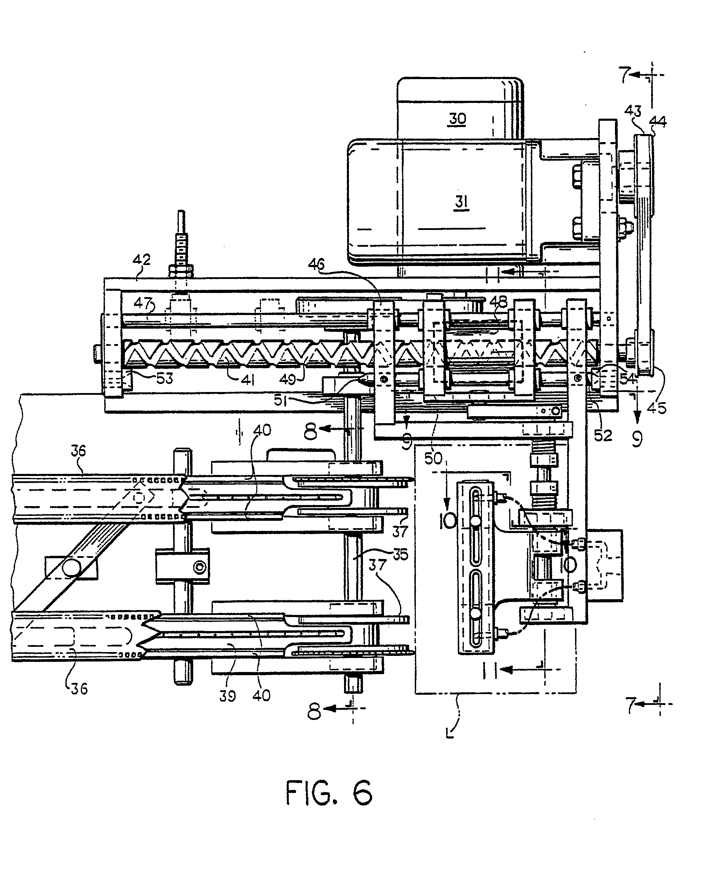

Fig. 6 is a fragmentary view to an enlarged scale of a portion of the apparatus shown in Fig. 4;

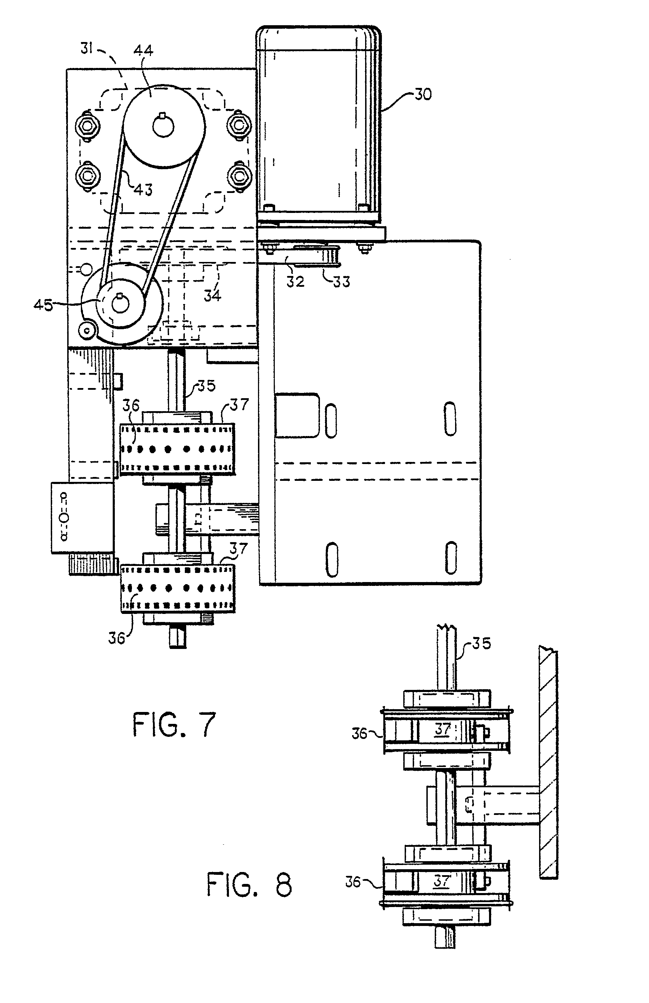

Fig. 7 is an end view of the apparatus shown in Fig. 6 taken along the line 7-7 of that Fig., parts being broken away;

Fig. 8 is a fragmentary sectional view taken along the line 8-8 of Fig. 6;

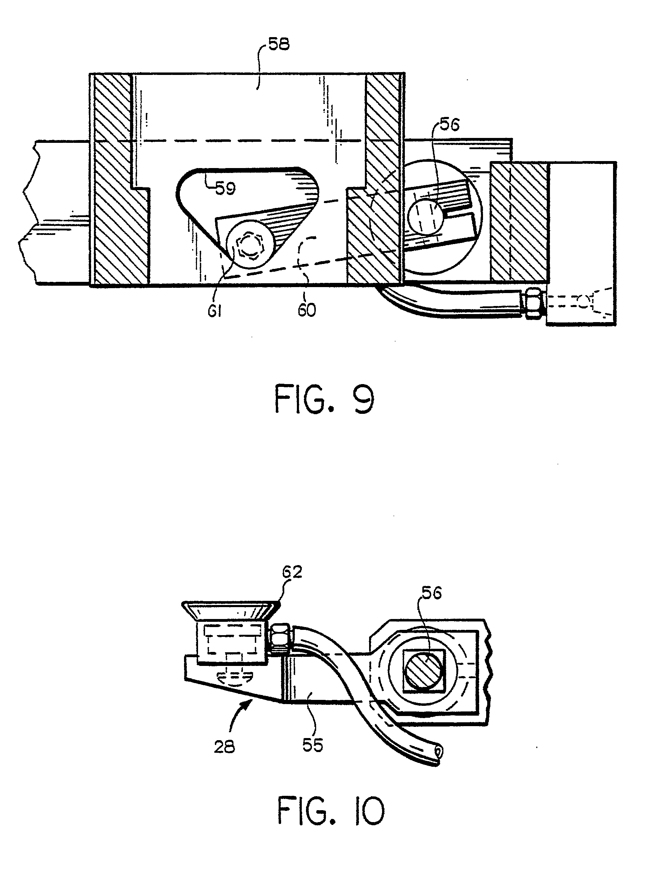

Fig. 9 is a fragmentary sectional view taken along the line 9-9 of Fig. 6;

Fig. 10 is a fragmentary sectional view to an enlarged scale taken along the line 10-10 of Fig. 6;

Fig. 11 is a fragmentary sectional view to an enlarged scale taken along the line 11-11 of Fig. 6;

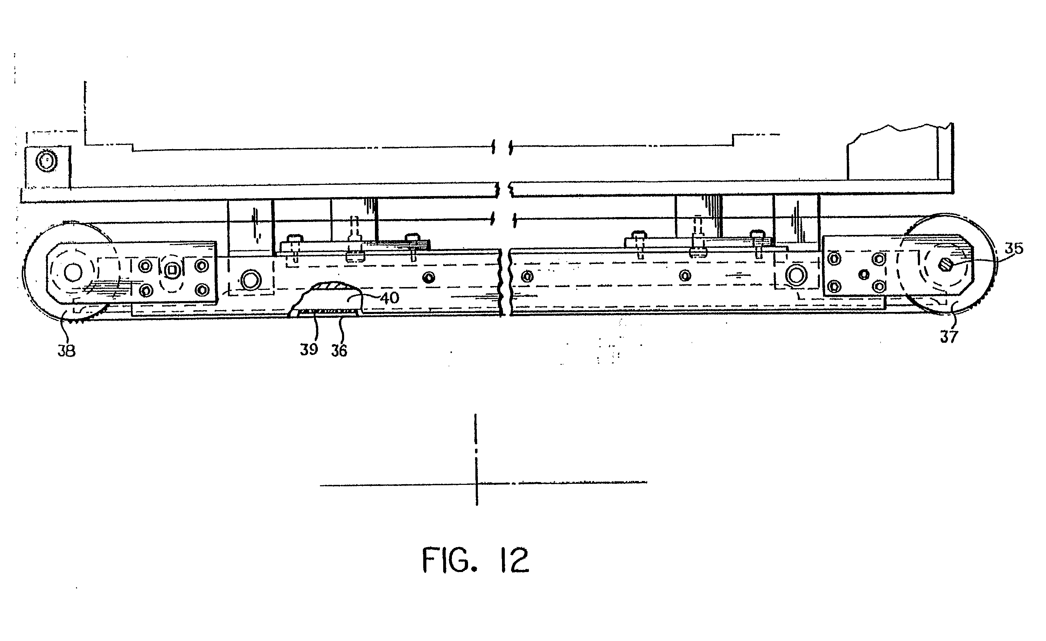

Fig. 12 is a fragmentary view to an enlarged scale taken along the line 12-12 of Fig. 4;

Fig. 13 is a fragmentary view to an enlarged scale taken along the line 13-13 in Fig. 2;

Fig. 14 is an elevational view of a portion of the apparatus shown in Fig. 13;

Fig. 15 is a fragmentary sectional view taken along the line 15-15 in Fig. 11; and

Fig. 16 is a fragmentary sectional view to an enlarged scale taken along the line 16-16 of Fig. 3.

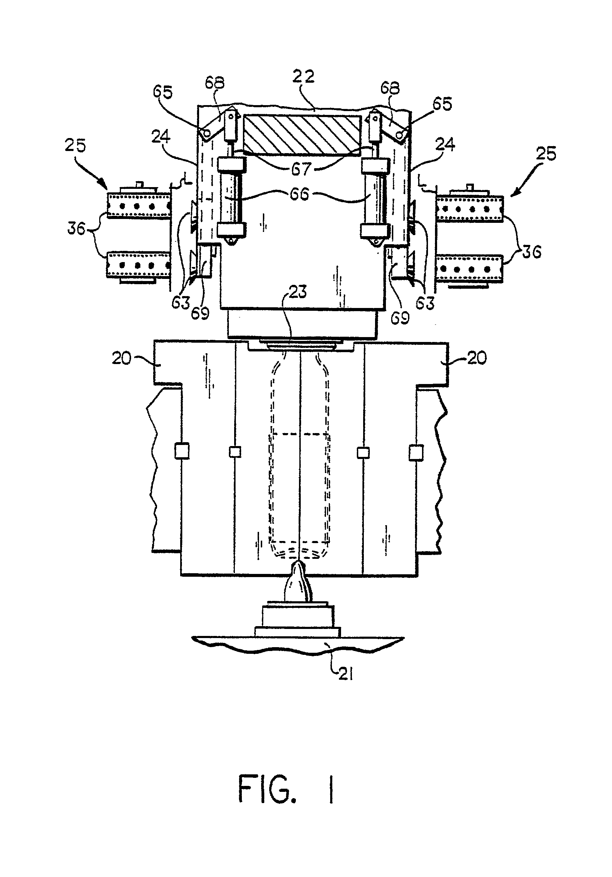

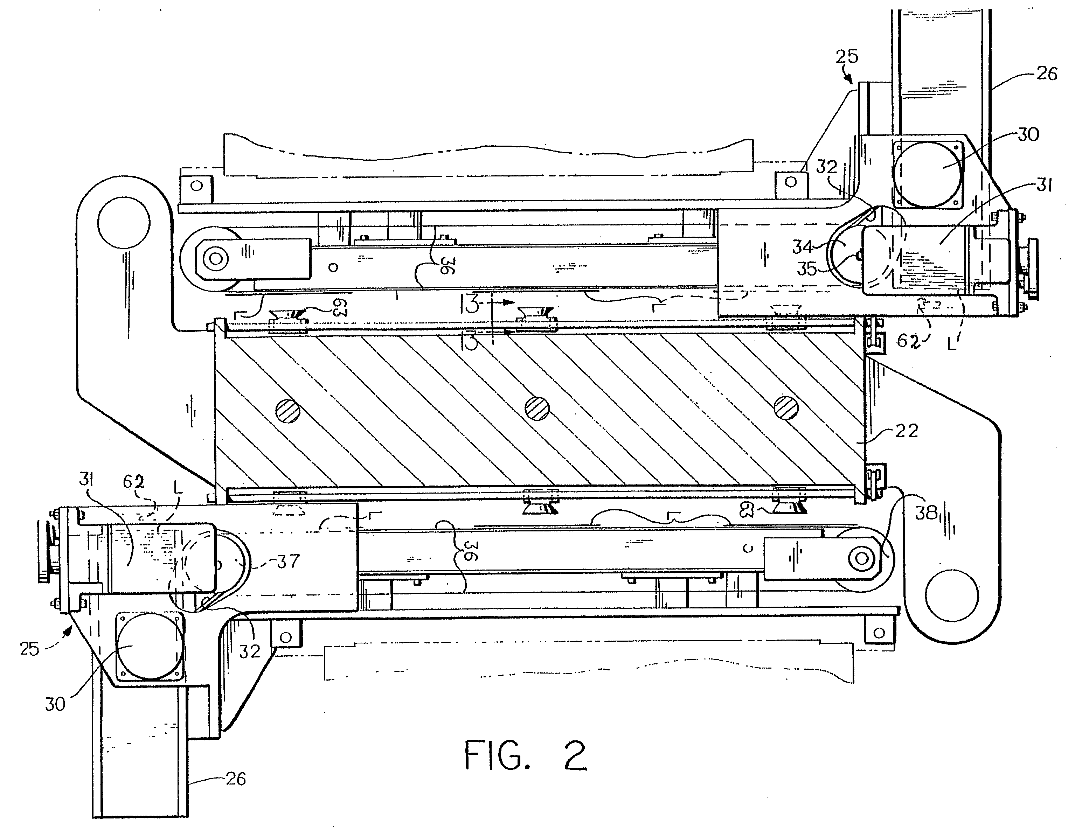

Referring to Figs. 1 and 2, the invention relates to blow moulded plastics articles such as containers, wherein labels are applied to sections of a set of moulds and the mould sections are closed around a heated parison or preform within each mould which is then blown outwardly into conformity with the mould sections causing the labels to become adhered or bonded to the blown articles.

In one type of apparatus to which the invention relates, the apparatus includes a plurality of sets of partible moulds 20 in a linear array, that is, side-by-side relationship. An extruder 21 is associated with each set of moulds and a head 22 is moved downwardly to receive the end 23 of an extruded tube in a neck mould in the head which is then drawn upwardly to position a preform or parison between the mould sections 20. The mould is then closed and the article blown to the desired configuration within the confines of the mould. To apply labels, the head 22 supports label deposit devices 24 as hereinafter described, which deliver labels to the mould sections. If only one label is to be applied to each article or container, a single deposit device 24 is provided for each set of moulds.

In accordance with the invention, a label handling mechanism 25 is associated with each set of label delivery devices 24. The label handling mechanisms 25 are of identical construction and as shown in Fig.2 are positioned end to end where labels L are to be delivered to both sections of each set of moulds. For convenience and clarity, only one of the mechanisms 25 will be described in detail, it being understood that the other device is identical.

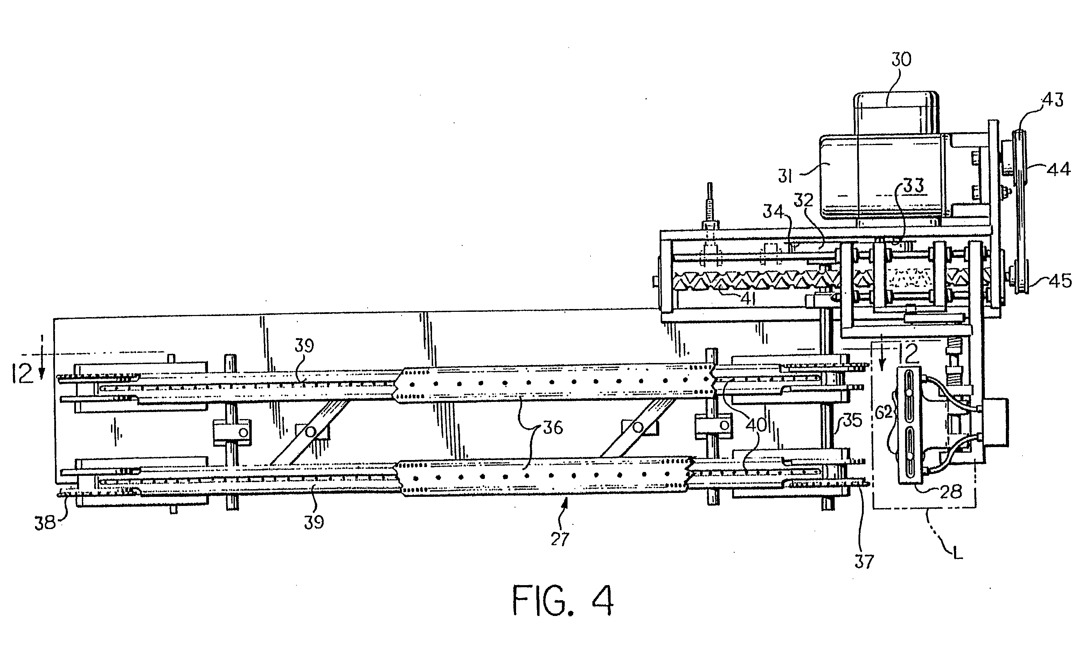

Referring to Figs. 2, 4, each of the mechanisms 25 includes a magazine 26 from which labels L are successively removed and delivered to an endless conveyor 27 by a label pick-up and delivery device 28. The endless conveyor 27 is intermittently driven so that as the labels L are delivered to the endless conveyor, they are positioned in a linear array at a spacing corresponding to the spacing of the sets of moulds. After the predetermined number of labels L corresponding to the sets of moulds is provided on the endless conveyor, the delivery device 24 removes the sets of labels L simultaneously and the head 22 moves downwardly to deliver the labels to the mould sections. The head 22 then moves upwardly as viewed in Fig. 1 while the tube is extruded to form the preform within the open mould sections. When the head 22 reaches its uppermost position as viewed in Fig. 1, the delivery devices 24 can pick up the next array of labels L which have in the meantime been positioned onto the endless conveyor by intermittent movement of the conveyor and the loading pick-up and delivery device 28.

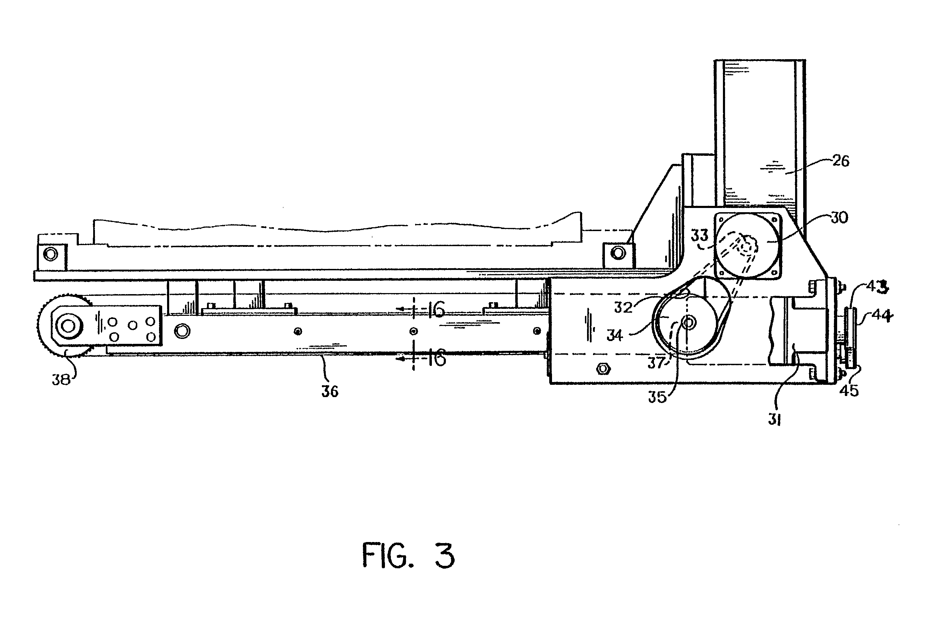

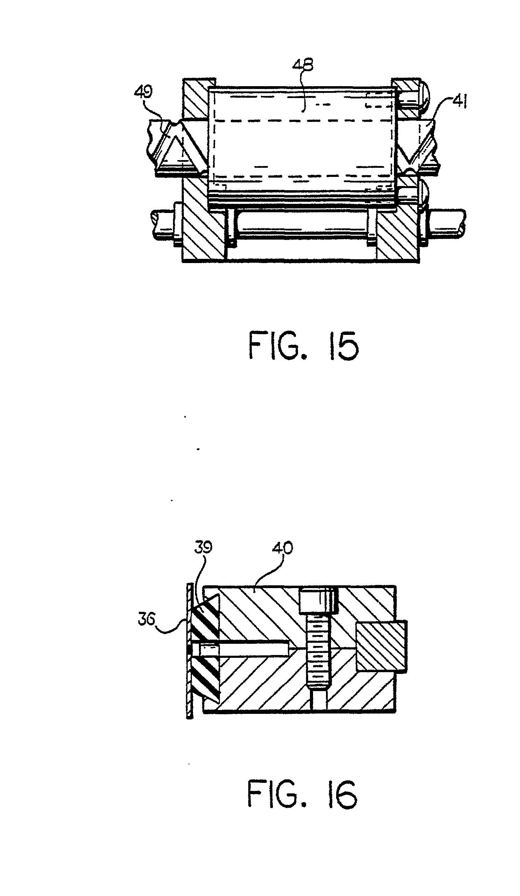

Referring to Fig. 3, power for driving the various mechanisms of each label handling mechanism 25 is received from motors 30, 31 on the frame. Motor 30 comprises a stepping motor and drives through an endless belt 32 and pulleys 33, 34 to a driveshaft 35 that rotates spaced thin metal endless perforated belts 36, trained on sprockets 37, 38 (Fig.2). Referring to Fig.16, endless belts 36 move across a perforated resilient wall 39 of a vacuum chamber 40 thereby applying vacuum which will hold the labels L when they are delivered. The endless belts 36 are moved intermittently and the labels L are delivered to the conveyor so that they form an array of labels L at a spacing corresponding to the array of the moulds.

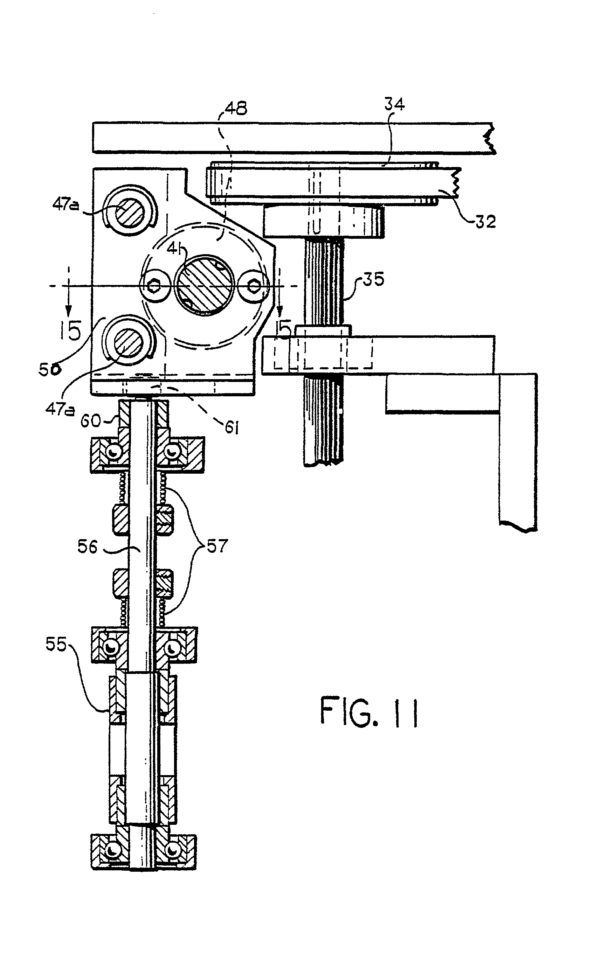

Motor 31 drives to a reversing screw 31 which is journalled in a frame 42, through an endless belt 43 and pulleys 44, 45. A primary carriage 46 is mounted in the frame 42 by spaced shafts 47 and has a follower 48 (Fig.15) engaging the thread 49 of the screw 41 so that the carriage 46 is reciprocated back and forth as the screw 41 is rotated in one direction. A secondary carriage 50 is mounted on the first carriage 46 and guided similarly on shafts 47a (Fig.11). Projections 51, 52 extend from the secondary carriage 50 such that just before the primary carriage 46 reaches the end of its movement, one or the other of the projections 51, 52 engages a recess 53, 54 respectively at each end to cause relative movement between the secondary carriage 50 and the primary carriage 46.

The pick-up and delivery device 28 includes an arm 55 mounted for swinging movement on a shaft 56 journalled on the frame and resiliently held in a centre position by springs 57. The secondary carriage 50 supports an internal cam 58 which is generally triangular and has its hypotenuse, or longest dimension 59 generally parallel to the screw. A link 60 is fixed on the shaft 56 of the pick-up and delivery device 28 has a follower 61 that engages the cam 58. As the primary carriage 46 reaches the end of its movement, the secondary carriage 50 is moved relative to the first carriage 46 causing the link 60 to pivot and move the delivery and pick-up device 28 into engagement with the magazine. The pick-up and delivery device 28 is of the vacuum type and includes vacuum cups 62 for picking up a label L from the magazine.

When the primary carriage 46 moves in the opposite direction, the cam 58 on the secondary carriage 50 moves the delivery and pick-up device 28 away from the magazine to its original position. As the primary carriage 46 moves toward its opposite end of movement, the secondary carriage 50 is moved relative to the primary carriage 46 and causes the cam 58 and cam follower 61 to swing the pick-up and delivery device 28 and bring the label L on the vacuum cups 62 into engagement with the endless conveyor belts 36 depositing the label L on the endless conveyor belts.

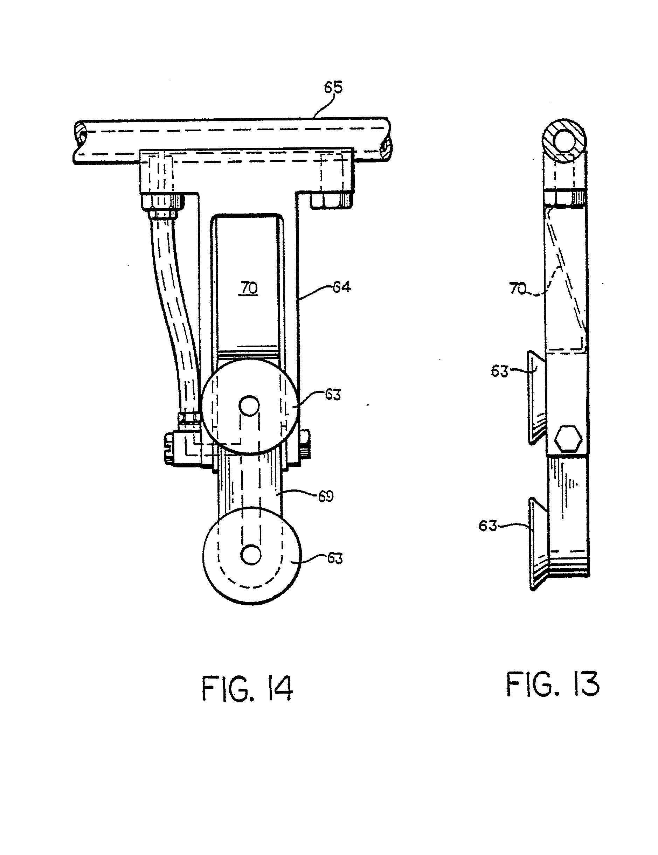

Referring to Figs. 13 and 14, the deposit devices 24 which remove the label L from the conveyor comprises spaced pairs of vacuum cups 63 mounted on the arm 64 of a shaft 65 pivoted on the head 22. Referring to Fig.1, cylinders 66 mounted on the head 22 each has its shaft 67 connected by a link 68 to shaft 65 on which the plurality of sets of deposit arms 64 are mounted and functions to move each pair of cups 63 simultaneously to engage all the labels L on the conveyor simultaneously. Retraction of the arms 64 removes the labels L so that when the head 22 is moved downwardly between the mould sections, actuation of the cylinder 66 of each set of arms will move the arms outwardly and deposit all of the labels L simultaneously in the respective mould sections of the sets of moulds. In order to permit the vacuum cups to readily engage the labels L on the conveyor, each arm 64 includes a secondary arm 69 pivoted on arm 64 and centered by a spring 70 (Figs. 13 and 14), thereby permitting limited movement of secondary arm 69 and in turn the cups 63 relative to the arm 64.

## Claims

1. Apparatus for forming hollow plastic articles wherein parisons are blown outwardly into conformity with the cavities of an array of sets of partible mould sections (20) which open and close and are in a predetermined array, including label-handling arrangements which comprise a magazine (26) for supporting labels (L) in a stack and a dispensing head for delivering the labels into the array of open mould sections, characterised by an endless belt transfer conveyor (27) positioned adjacent the magazine (26), means (30, 32 to 35) for indexing said belt conveyor along predetermined distances corresponding to the spaces between the sets of said mould sections of said array, means (28) for successively removing a label from the magazine and depositing it on said conveyor (27), to produce a predetermined array of spaced labels with the spacing between the labels on the endless transfer conveyor corresponding to the spaces between the sets of mould sections, and means (24) for simultaneously removing the array of labels from said endless transfer conveyor and delivering them between the array of open partible mould sections.

2. Apparatus as claimed in claim 1, characterised in that the means (24) for removing and simultaneously delivering the labels (L) comprises a plurality of label delivery devices corresponding in number to the number of sets of mould sections and positioned at a spacing corresponding to the spacing between the labels in the array on the endless transfer conveyor (27) and means (64 to 69) for moving said label delivery devices (24) from a position adjacent said conveyor to a position within an array of the sets of open partible mould sections, the delivery devices having means for removing the labels from said conveyor (27) and means for depositing said labels within said mould sections (20).

3. Apparatus as claimed in claim 2, characterised in that the last named means comprises vacuum devices (63).

4. Apparatus as claimed in claim 3, characterised in that the vacuum devices are mounted on a head (22) which functions to draw the parisons from an extruder (21).

5. Apparatus as claimed in claim 1, 2, 3 or 4, characterised in that the means for removing said labels successively from the magazine (26) comprises a pick-up and delivery device (28), means (55, 56) for moving said pick-up and delivery device (28) adjacent the magazine (26) for picking up a label, and means for translating said pick-up and delivery device (28) to deposit said labels consecutively onto said conveyor as the conveyor is indexed.

6. Apparatus as claimed in claim 5, characterised in that the means for translating said pick-up and delivery device (28) comprises a carriage (46), means for guiding the carriage in movement in a linear path parallel to the conveyor, and an endless reversible screw (41) parallel to the conveyor operable to move the carriage (46) back and forth in the linear path, said pick-up and delivery device (28) being mounted for pivotal movement on said carriage (46), interengaging means (50 to 54) between said pick-up and delivery device (28) and said carriage operable upon movement of the carriage (46) to the extremes of its linear movement such that the pick-up and delivery device (28) is moved at one end of said linear movement into engagement with the magazine (26) for picking up a label (L) and upon return movement is moved out of engagement with the magazine (26) and upon returning to the other end of the linear movement in the opposite direction is moved to bring the label into engagement with the endless conveyor (27).

7. Apparatus as claimed in claim 6, characterised in that the pick-up and delivery device (28) is of the vacuum type.

8. Apparatus as claimed in claim 7, characterised in that the endless conveyor (27) is of the vacuum type for holding the labels.

9. Apparatus as claimed in claim 6, 7 or 8, characterised in that the interengaging means comprises a secondary carriage (50) mounted on said first mentioned carriage (46), said secondary carriage being connected to said pickup and delivery device (28) and movable relative to said first carriage (46).

10. Apparatus as claimed in claim 9, characterised in that the interengaging means further comprises a cam (58) on said secondary carriage (50) and a cam follower (61) on said pick-up device (28).

11. Apparatus as claimed in claim 10, characterised in that the cam (58) comprises an internal cam which is generally triangular in configuration having its base extending generally parallel to the direction of translation of said second carriage (50), and that said pick-up device has a link (60) with a cam follower (61) engaging said cam (58).

12. Apparatus as claimed in any one of claims 1 to 11, characterised by the inclusion of a second substantially identical label handling apparatus positioned adjacent a second magazine (26) for removing labels (L) successively from the second magazine, moving them into a linear array on a second conveyor means (27), and transferring them from the second conveyor means to the opposite partible mould section of said array of said sets of mould sections such that two labels are delivered to each set of mould sections in the predetermined array simultaneously.

13. Apparatus for forming hollow plastic articles wherein parisons are blown outwardly into conformity with the cavities of an array of sets of partible mould sections (20) which open and close and are in a predetermined array, including label-handling arrangements which comprise a magazine (26) for supporting labels (L) in a stack and a dispensing head for delivering the labels into the array of open mould sections, characterised by an endless belt transfer conveyor (27) of the vacuum type positioned adjacent said magazine (26), means (30, 32 to 35) for indexing said belt conveyor along predetermined distances corresponding to the spaces between the sets of said mould sections of said array, means (28) for successively removing a label from the magazine and depositing it on the conveyor (27), to produce a predetermined array of spaced labels with the spacing between the labels on said endless transfer conveyor (27) corresponding to the spaces between the sets of mould sections (20), a pick-up and delivery device (28), means (55, 56) for moving said pick-up and delivery device (28) adjacent the magazine (26) for picking up a label (L), and means for translating said pick-up and delivery device (28) to deposit said labels consecutively onto said conveyor as the conveyor is indexed, said lastmentioned means comprising a carriage (46), means for removing and simultaneously delivering said labels comprising a plurality of label delivery devices (28), corresponding in number to the number of sets of mould sections and positioned at a spacing corresponding to the spacing between the labels in the array on the endless transfer conveyor (27), vacuum devices (63) for moving said label delivery devices from a position adjacent said conveyor (27) to a position within an array of the sets of open partible mould sections (20), said delivery devices having means for removing said labels from said conveyor and means for depositing said labels within said mould sections (20), means for guiding said carriage in movement in a linear path parallel to the conveyor (27), and an 5 endless reversible screw (41) parallel to the conveyor operable to move said carriage (46) back and forth in said linear path, said pick-up and delivery device (28) being mounted for pivotal movement on said carriage (46), interengaging means (50 to 54) between said pick-up and delivery device (28) and said carriage (46) operable upon movement of the carriage to the extremes of its linear movement such that the pick-up and delivery device (28) is moved at one end of said linear movement into engagement with the magazine (26) for picking up a label (L) and upon return movement is moved out of engagement with the magazine (26) and upon returning to the other end of the linear movement in the opposite direction is moved to bring the label into engagement with the endless conveyor (27), said interengaging means comprising a secondary carriage (46), said secondary carriage (50) being connected to said pick-up and delivery device (28) and movable relative to said first carriage (46), said interengaging means further comprising a cam (58) on said secondary carriage (50) and a cam follower (61) on said pick-up device (28).

**Patentansprüche**

1. Vorrichtung zum Formen hohler Kunststoffgegenstände, in der Werkstofftropfen nach außen konform in Hohlräume einer Satzanordnung teilbarer Formabschnitte (20) geblasen werden, die sich öffnen und schließen und sich in vorbestimmter Anordnung befinden, wobei Etikettenhandhabungsanordnungen vorgesehen sind, die ein Magazin (26) zur Aufnahme von Etiketten (L) in einem Stapel einschließen und einem Ausgabekopf zum Ausgeben der Etiketten in die Anordnung offener Formabschnitte, gekennzeichnet durch einen nahe dem Magazin (26) angeordneten Endlosgurtförderer (27), Mittel (30, 32 bis 35) zum Markieren des Gurtförderers in vorbestimmten Abständen, die den Abständen zwischen den Sätzen der Formabschnitte der Anordnung entsprechen, Mittel (28) zum aufeinanderfolgenden Entnehmen eines Etiketts aus dem Magazin und Ablegen auf dem Förderer (27), um eine vorbestimmte Anordnung von beabstandeten Etiketten zu erzeugen, wobei die Abstände zwischen den Etiketten auf dem Endlosgurtförderer den Abständen zwischen den Sätzen der Formabschnitte entsprechen, und Mittel (24) zum gleichzeitigen Entnehmen der Anordnung von Etiketten von dem Endlosgurtförderer und Abgeben derselben zwischen der Anordnung der offenen teilbaren Formabschnitte.

2. Vorrichtung nach Anspruch 1, dadurch gekennzeichnet, daß das Mittel (24) zum Entnehmen und gleichzeitigen Abgeben der Etiketten (L) mehrere Etikettenabgabevorrichtungen aufweist, die zahlenmäßig der Anzahl der Sätze der Formabschnitte entsprechen und in Abständen angeordnet sind, die den Abständen zwischen den Etiketten in der Anordnung auf dem Endlosgurtförderer (27) entsprechen, und Mittel (64 bis 69) zum Bewegen der Etikettenabgabevorrichtungen (24) zwischen einer Position nahe dem Förderer zu einer Position in einer Anordnung der Sätze offener teilbarer Formabschnitte, wobei die Abgabevorrichtungen Mittel zum Entnehmen der Etiketten von dem Förderer (27) und Mittel zum Ablegen der Etiketten in den Formabschnitten (20) aufweisen.

3. Vorrichtung nach Anspruch 2, dadurch gekennzeichnet, daß das zuletzt genannte Mittel Vakuumvorrichtungen (63) aufweist.

4. Vorrichtung nach Anspruch 3, dadurch gekennzeichnet, daß die Vakuumvorrichtungen auf einem Kopf (22) angeordnet sind, der die Werkstofftropfen von einem Extruder (21) zieht.

5. Vorrichtung nach Anspruch 1, 2, 3 oder 4, dadurch gekennzeichnet, daß die Mittel zum aufeinanderfolgenden Entnehmen der Etiketten aus dem Magazin (26) eine Aufnahme- und Abgabevorrichtung (28) aufweisen, Mittel (55, 56) zum Bewegen der Aufnahme- und Abgabevorrichtung (28) nahe dem Magazin (26) zur Aufnahme eines Etiketts und Mittel zum Befördern der Aufnahme- und Abgabevorrichtung (28), um die Etiketten aufeinanderfolgend auf dem Förderer gemäß dessen Markierung abzulegen.

6. Vorrichtung nach Anspruch 5, dadurch gekennzeichnet, daß die Mittel zum Befördern der Aufnahme- und Ablagevorrichtung (28) einen Wagen (46) aufweisen, Mittel zur Führung des Wagens in einer Bewegung auf einem linearen Pfad parallel zum Förderer und eine endlose Umkehrschraube (41) parallel zum Förderer, die den Wagen (46) auf dem linearen Pfad vor- und zurückbewegt, wobei die Aufnahme- und Ablagevorrichtung (28) schwenkbar auf dem Wagen (46) angebracht ist, Eingriffsmittel (50 bis 54) zwischen der Aufnahme- und Abgabevorrichtung (28) und dem Wagen, die bei Bewegung des Wagens (46) zu den Endpunkten seiner Linearbewegung so wirken, daß die Aufnahme- und Ablagevorrichtung (28) an einem Ende der Linearbewegung in Eingriff mit dem Magazin (26) zur Aufnahme eines Etiketts (L) gebracht wird und bei der Rückbewegung außer Eingriff mit dem Magazin gebracht wird und nach Rückkehr zum anderen Ende der Linearbewegung in der Gegenrichtung das Etikett in Eingriff mit dem Endlosförderer (27) bringt.

7. Vorrichtung nach Anspruch 6, dadurch gekennzeichnet, daß die Aufnahme- und Abgabevorrichtung (28) zum Vakuumtyp gehört.

8. Vorrichtung nach Anspruch 7, dadurch gekennzeichnet, daß der Endlosförderer (27) zum Vakuumtyp zum Halten der Etiketten gehört.

9. Vorrichtung nach Anspruch 6, 7 oder 8, dadurch gekennzeichnet, daß das Eingriffsmittel einen sekundären Wagen (50) aufweist, der auf dem erstgenannten Wagen (46) angeordnet ist, wobei der sekundäre Wagen mit der Aufnahme und Abgabevorrichtung (28) verbunden und relativ zum ersten Wagen (46) bewegbar ist.

10. Vorrichtung nach Anspruch 9, dadurch gekennzeichnet, daß das Eingriffsmittel weiter einen Nocken (58) auf dem sekundären Wagen (50) und einen Nockenfolger (61) auf der Aufnahmevorrichtung (28) aufweist.

11. Vorrichtung nach Anspruch 10, dadurch gekennzeichnet, daß der Nocken (58) einen inneren Nocken aufweist, der eine allgemein dreieckige Ausbildung hat, wobei seine Basis sich parallel zur Beförderungsrichtung des zweiten Wagens (50) erstreckt und daß die Aufnahmevorrichtung ein Glied (60) mit einem Nockenfolger (61) aufweist, der auf den Nocken (58) wirkt.

12. Vorrichtung nach einem der Ansprüche 1 bis 11, gekennzeichnet durch den Einschluß einer zweiten, im wesentlichen identischen Etikettenhandhabungsvorrichtung, die nahe am zweiten Magazin (26) angeordnet ist zum aufeinanderfolgenden Entnehmen von Etiketten (L) aus dem zweiten Magazin, zu ihrem Verbringen in eine lineare Anordnung auf einem zweiten Fördermittel (27) und ihrem Befördern von dem Fördermittel zu dem gegenüberliegenden teilbaren Formabschnitt der Anordnung von Sätzen der Formabschnitte derart, daß gleichzeitig zwei Etiketten an jeden Satz von Formabschnitten in der vorbestimmten Anordnung abgegeben werden.

13. Vorrichtung zum Formen hohler Kunststoffgegenstände, in der Werkstofftropfen nach außen konform in Hohlräume einer Satzanordnung teilbarer Formabschnitte (20) geblasen werden, die sich öffnen und schließen und sich in vorbestimmter Anordnung befinden, wobei Etikettenhandhabungsanordnungen vorgesehen sind, die ein Magazin (26) zur Aufnahme von Etiketten (L) in einem Stapel einschließen und einen Ausgabekopf zum Ausgeben der Etiketten in die Anordnung offener Formabschnitte, gekennzeichnet durch einen nahe dem Magazin (26) angeordneten Endlosgurtförderer (27) des Vakuumtyps, der nahe dem Magazin (26) angeordnet ist, Mittel (30, 32 bis 35) zum Markieren des Gurtförderers in vorbestimmten Abständen, die den Abständen zwischen den Sätzen der Formabschnitte der Anordnung entsprechen, Mittel (28) zum aufeinanderfolgenden Entnehmen eines Etiketts aus dem Magazin und Ablegen auf dem Förderer (27), um eine vorbestimmte Anordnung von beabstandeten Etiketten zu erzeugen, wobei die Abstände zwischen den Etiketten auf dem Endlosgurtförderer (27) den Abständen zwischen den Sätzen der Formabschnitte (20) entsprechen, eine Aufnahme- und Ablagevorrichtung (28), Mittel (55, 56) zum Bewegen der Aufnahme- und Ablagevorrichtung (28) nahe dem Magazin (26) zur Aufnahme eines Etiketts (L) und Mittel zur Beförderung der Aufnahme- und Ablagevorrichtung (28), um die Etiketten aufeinanderfolgend auf dem Förderer gemäß dessen Markierung abzulegen, wobei die zuletzt genannten Mittel einen Wagen (46) aufweisen, Mittel zum Entnehmen und gleichzeitigen Abgeben der Etiketten, die mehrere Etikettenabgabevorrichtungen (28) aufweisen, wobei deren Anzahl der Anzahl der Sätze von Formabschnitten entspricht und sie in Abständen angeordnet sind, die den Abständen zwischen den Etiketten in der Anordnung auf dem Endlosgurtförderer (27) entsprechen, Vakuumvorrichtungen (63) zum Bewegen der Etikettenabgabevorrichtungen aus einer Position nahe dem Förderer (27) zu einer Position in einer Aordnung von Sätzen offener teilbarer Formabschnitte (20), wobei die Abgabevorrichtungen Mittel zum Entnehmen der Etiketten vom Förderer aufweisen und Mittel zum Ablegen der Etiketten in den Formabschnitten (20), Mittel zum Führen des Wagens bei einer Bewegung auf einem linearen Pfad parallel zum Förderer (27) und eine endlose Umkehrschraube (41) parallel zum Förderer zum Vor- und Zurückbewegen des Wagens (46) auf dem linearen Pfad, wobei die Aufnahme- und Abgabevorrichtung (28) schwenkbar auf dem Wagen (46) angeordnet ist, Eingriffsmittel (50 bis 54) zwischen der Aufnahme- und Abgabevorrichtung (28) und dem Wagen (46), die bei Bewegung des Wagens zu den Endpunkten seiner Linearbewegung so wirken, daß die Aufnahme- und Abgabevorrichtung (28) zum einen Ende der Linearbewegung bewegt und mit dem Magazin (26) zur Aufnahme eines Etiketts (L) in Eingriff gebracht wird und bei der Rückbewegung außer Eingriff mit dem Magazin (26) gebracht wird und bei Rückkehr zum anderen Ende der Linearbewegung in umgekehrter Richtung das Etikett mit dem Endlosförderer (27) in Eingriff bringt, wobei die Eingriffsmittel einen sekundären Wagen (50) aufweisen, der auf dem ersten Wagen (46) angebracht ist, wobei der sekundäre Wagen (50) mit der Aufnahme- und Abgabevorrichtung (28) verbunden und relativ zum ersten Wagen (46) bewegbar ist, wobei die Eingriffsmittel weiter einen Nocken (58) auf dem sekundären Wagen und einen Nockenfolger (61) auf der Aufnahmevorrichtung (28) aufweisen.

## Revendications

1. Dispositif pour constituer des articles creux en matière plastique dans lequel des parsisons sont dilatées par soufflage conformément aux cavités d'une rangée de jeux de sections (20) de moules séparables qui s'ouvrent et se ferment et sont placés selon un rangement prédéterminé, comprenant des agencements pour manier des étiquettes qui comportent un chargeur (26) destiné à supporter des étiquettes empilées (L) et une tête de distribution destinée à fournir les étiquettes dans la rangée de sections de moules ouverts, caractérisé par un transporteur (27) à courroie sans fin positionné à proximité du chargeur (26), des moyens (30, 32 à 35) de disposer des repères sur ledit convoyeur à courroie à des distences prédéterminées correspondant aux intervalles existant entre les jeux desdites sections de moules de ladite rangée, des moyens (28) agissant successivement pour enlever une étiquette provenant du chargeur et la déposer sur ledit convoyeur (27), de manière à créer une rangée prédéterminée d'étiquettes espacées dans laquelle l'espacement entre les étiquettes situées sur le transporteur sans fin correspond aux intervalles entre les jeux de sections de moules, et des moyens (24) agissant simultanément pour enlever la rangée d'étiquettes provenant dudit transporteur sans fin et les distribuer entre la rangée des sections de moules séparables et ouverts.

2. Dispositif selon la revendication 1, caractérisé en ce que les moyens (24) pour enlever et simultanément distribuer les étiquettes (L) comportent une pluralité de dispositifs de distribution d'étiquettes dont le nombre correspond au nombre de jeux de sections de moules et qui sont positionnés à un espacement correspondant à l'espacement entre les étiquettes dans la rangée située sur le transporteur sans fin (27) et des moyens (64 à 69) pour déplacer lesdits dispositifs (24) de distribution d'étiquettes depuis une position à proximité dudit convoyeur jusqu'à une position située à l'intérieur d'une rangée de jeux de sections de moules séparables et ouverts, les dispositifs de distribution possédant des moyens pour enlever les étiquettes dudit convoyeur (27) et des moyens pour déposer lesdites étiquettes à l'intérieur desdites sections (20) de moules.

3. Dispositif selon la revendication 2, caractérisé en ce que les derniers moyens cités comportent des dispositifs (63) fonctionnant par le vide.

4, Dispositif selon la revendication 3, caractérisé en ce que les dispositifs fonctionnant par le vide sont montés sur une tête (22) qui fonctionne de façon à tirer les paraisons à partir d'un dispositif d'extrusion (21).

5. Dispositif selon l'une quelconque des revendications 1 à 4, caractérisé en ce que les moyens pour enlever d'une façon successive lesdites étiquettes provenant du chargeur (26) comportent un dispositif (28) de ramassage et livraison, des moyens (55, 56) de déplacer ledit dispositif (28) de ramassage et livraison à proximité du chargeur (26) pour ramasser une étiquette, et des moyens de translater ledit dispositif (28) de ramassage et livraison pour déposer lesdites étiquettes d'une manière consécutive sur ledit convoyeur lorsque ce convoyeur est muni de repères.

6. Dispositif selon la revendication 5, caractérisé en ce que les moyens de translater ledit dispositif (28) de ramassage et livraison comportent un chariot (46), des moyens de guider ce chariot en un déplacement selon un circuit linéaire parallèle au convoyeur, et une vis sans fin réversible (41) parallèle au convoyeur et apte à fonctionner de façon à déplacer le chariot (46) en avant et en arrière sur le circuit linéaire, ledit dispositif (28) de ramassage et livraison étant monté pour un déplacement rotatif sur ledit chariot (46), des moyens (50 à 54) d'enclenchement mutuel disposés entre ledit dispositif (28) de ramassage et livraison et ledit chariot étant aptes à fonctionner lors d'un déplacement du chariot (46) jusqu'aux points extrêmes de son déplacement linéaire de telle manière que le dispositif (28) de ramassage et livraison est déplacé, à une extrémité dudit déplacement linéaire, jusqu'à s'enclen-. cher sur le chargeur (26) pour ramasser une étiquette (L) et dès le mouvement de retour est déplacé en se désenclenchant du chargeur (26) et dès le retour à l'autre extrémité du déplacement linéaire en sens opposé est déplacé de façon à amener l'étiquette en contact avec le convoyeur (27) sans fin.

7. Dispositif selon la revendication 6, caractérisé en ce que le dispositif (28) de ramassage et livraison est du type-fonctionnant par le vide.

8. Dispositif selon la revendication 7, caractérisé en ce que le convoyeur (27) sans fin est du type fonctionnant par le vide pour tenir les étiquettes.

9. Dispositif selon l'une quelconque des revendications 6, 7 ou 8, caractérisé en ce que les moyens d'enclenchement mutuel comportent un chariot secondaire (50) monté sur ledit chariot premier cité (46), ledit chariot secondaire étant relié audit dispositif (28) de ramassage et livraison et ayant la faculté de se déplacer par rapport audit premier chariot (46).

10. Dispositif selon la revendication 9, caractérisé en ce que les moyens d'enclenchement mutuel comportent en outre une came (58) située sur ledit chariot secondaire (50) et un galet (61) de came situé sur ledit dispositif (28) de ramassage.

11. Dispositif selon la revendication 10, caractérisé en ce que la came (58) comporte une came interne qui a une configuration globalement triangulaire dont la base s'étend dans un sens globalement parallèle à la direction de translation dudit second chariot (50), et que ledit dispositif de ramassage est pourvu d'une pièce de liaison (60) munie d'un galet (61) de came en contact avec ladite came (58).

12. Dispositif selon l'une quelconque des revendications 1 à 11, caractérisé par l'incorporation d'un second dispositif de maniement d'étiquettes pratiquement identique positionné à proximité d'un second chargeur (26) et destiné à enlever d'une façon successive des étiquettes (L) provenant du second chargeur, à les déplacer en une rangée linéaire située sur un second moyen (27) formant convoyeur, et à les transporter depuis le second moyen formant convoyeur jusqu'à la section opposée de moule séparable de ladite rangée desdits jeux de sections de moules de telle manière que deux étiquettes sont fournies simultanément à chaque jeu de sections de moules selon le rangement prédéterminé.

13. Dispositif pour constituer des articles creux en matière plastique dans lequel des paraisons sont dilatées par soufflage conformément aux cavités d'une rangée de jeux de sections (20) de moules séparables qui s'ouvrent et se ferment et sont placés selon un rangement prédéterminé, comprenant des agencements pour manier des étiquettes qui comportent un chargeur (26) destiné à supporter des étiquettes empilées (L) et une tête de distribution destinée à fournir les étiquettes dans la rangée de sections de moules ouverts, caractérisé par un transporteur (27) à courroie sans fin du type fonctionnant par le vide positionné à proximité dudit chargeur (26), des moyens (30, 32 à 35) de disposer des repères sur ledit convoyeur à courroie à des distances prédéterminées correspondant aux intervalles existant entre les jeux desdites sections de moules de ladite rangée, des moyens (28) agissant successivement pour enlever une étiquette provenant du chargeur et la déposer sur le convoyeur (27), de manière à créer une rangée prédéterminée d'étiquettes espacées dans laquelle l'espacement entre les étiquettes situées sur ledit transporteur (27) sans fin correspond aux intervalles entre les jeux de sections (20) de moules, un dispositif (28) de ramassage et livraison, des moyens (55, 56) de déplacer ledit dispositif (28) de ramassage et livraison à proximité du chargeur (26) pour ramasser une étiquette (L), et des moyens de translater ledit dispositif (28) de ramassage et livraison pour déposer lesdites étiquettes d'une manière consécutive sur ledit convoyeur lorsque ce convoyeur est muni de repères, lesdits derniers moyens cités comportant un chariot (46), des moyens pour enlever et simultanément distribuer lesdites étiquettes comportant une pluralité de dispositifs (28) de distribution d'étiquettes, dont le nombre correspond au nombre de jeux de sections de moules et qui sont positionnés à un espacement correspondant à l'espacement entre les étiquettes dans la rangée située sur le transporteur sans fin (27), des dispositifs (63) fonctionnant par le vide pour déplacer lesdits dispositifs de distribution d'étiquettes depuis une position à proximité dudit convoyeur (27) jusqu'à une position située à l'intérieur d'une rangée de jeux de sections de moules (20) séparables et ouverts, lesdits dispositifs de distribution possédant des moyens pour enlever lesdites étiquettes provenant dudit convoyeur et des moyens pour déposer lesdites étiquettes à l'intérieur desdites sections (20) de moules, des moyens de guider ledit chariot en un déplacement selon un circuit linéaire parallèle au convoyeur (27), et une vis sans fin réversible (41) parallèle au convoyeur et apte à fonctionner de façon à déplacer ledit chariot (46) en avant et en arrière sur ledit circuit linéaire, ledit dispositif (28) de ramassage et livraison étant monté pour un déplacement rotatif sur ledit chariot (46), des moyens (50 à 54) d'enclenchement mutuel disposés entre ledit dispositif (28) de ramassage et livraison et ledit chariot (46) étant aptes à fonctionner lors d'un déplacement du chariot jusqu'aux points extrêmes de son déplacement linéaire de telle manière que le dispositif (28) de ramassage et livraison est déplacé, à une extrémité dudit déplacement linéaire, jusqu'à s'enclencher sur le chargeur (26) pour ramasser une étiquette (L) et dès le mouvement de retour est déplacé en se désenclenchant du chargeur (26) et dès le retour à l, autre extrémité du déplacement linéaire en sens opposé est déplacé de façon à amener l'étiquette en contact avec le convoyeur (27) sans fin, lesdits moyens d'enclenchement mutuel comportant un chariot secondaire ( 50) monté sur ledit chariot premier cité (46), ledit chariot secondaire (50) étant relié audit dispositif (28) de ramassage et livraison et ayant la faculté de se déplacer par rapport audit premier chariot (46), lesdits moyens d'enclenchement mutuel comportant en outre une came (58) située sur ledit chariot secondaire (50) et un galet (61) de came situé sur ledit dispositif (28) de ramassage.

FIG. 1

FIG. 2

EP 0 194 081 B1

FIG. 3

FIG. 4

EP 0 194 081 B1

EP 0 194 081 B1

FIG. 5

FIG. 6

EP 0 194 081 B1

FIG. 7

FIG. 8

58

56

59

61        60

## FIG. 9

62

56

28        55

## FIG. IO

FIG. 11

FIG. 12

EP 0 194 081 B1

FIG. 14

FIG. 13

FIG. 15

FIG. 16